# EUROPÄISCHE PATENTSCHRIFT

(11) **EP 1 572 487 B1**
(45) Veröffentlichungstag und Bekanntmachung des Hinweises auf die Patenterteilung: **15.11.2006**
(21) Anmeldenummer: 03767807.5
(22) Anmeldetag: 16.12.2003
(51) Int. Cl.: B60K 7/00, F16D 59/02

(54) **RADNABENANTRIEB**
WHEEL HUB DRIVE
ENTRAINEMENT DE MOYEU DE ROUE

(30) Priorität: 20.12.2002 DE 10260003
(43) Veröffentlichungstag der Anmeldung: 14.09.2005
(73) Patentinhaber: ZF FRIEDRICHSHAFEN Aktiengesellschaft, 88038 Friedrichshafen (DE)
(72) Erfinder: STÜBNER, Frank, 99894 Ernstroda (DE)
(86) Internationale Anmeldenummer: PCT/EP2003/014289
(87) Internationale Veröffentlichungsnummer: WO 2004/058531

(56) Entgegenhaltungen:
- EP-A- 0 811 780
- EP-A- 0 999 081
- DE-A- 2 133 202
- DE-A- 19 904 552

## Beschreibung

Die vorliegende Erfindung betrifft einen Radnabenantrieb gemäß dem Oberbegriff des Patentanspruchs 1, und wie aus der US 2002/0121823 bekannt.

Radnabenabtriebe werden nach dem Stand der Technik üblicherweise bei Flurförderfahrzeugen eingesetzt, da sie gegenüber Flach- oder Kegelradgetrieben den Vorteil aufweisen, dass Getriebe, Fahrmotor, Bremse und Rad auf kleinstem Raum angeordnet sind. Zudem werden durch den Einsatz von Radnabenabtrieben Fahrwerke ohne durchgehende Achswellen ermöglicht.

Ein wesentliches Merkmal eines Radnabenantriebes ist der Hüllkreis, also der Kreis, der beim Lenken bzw. Drehen des Antriebes um die Lenkachse entsteht. Bei den Radnabenantrieben nach dem Stand der Technik wird der Hüllkreis durch die Dimensionen des Getriebes im Verbund mit Motor und Bremse bestimmt. Dies bedeutet, dass der Radius des Hüllkreises relativ groß ist, wenn man ihn mit dem Radius eines Kreises vergleicht, der beim Lenken durch das Drehen des Laufrades bestimmt wird.

Der vorliegenden Erfindung liegt die Aufgabe zugrunde, einen Radnabenantrieb anzugeben, bei dem das Laufrad zur bestimmenden Größe des Hüllkreises wird, so dass der kleinstmögliche Hüllkreis entsteht.

Diese Aufgabe wird durch die Merkmale des Patentanspruchs 1 gelöst. Weitere Ausgestaltungen und Vorteile gehen aus den Unteransprüchen hervor.

Demnach wird vorgeschlagen, in den Radnabenantrieb eine Bremse zu integrieren, welche sehr kompakte Dimensionen aufweist, derart, dass der Hüllkreis des Radnabenantriebes durch das Laufrad bestimmt wird, wobei Getriebe, Motor und Bremse innerhalb eines Kreises angeordnet sind, dessen Radius durch das Laufrad bestimmt wird.

Hierbei besteht der Stator der Bremse erfindungsgemäß aus einem Blechteil oder Sinterteil, das mit dem Gehäusedeckel verschraubt ist. Des weiteren ist die Ankerscheibe ebenfalls aus einem Blech gefertigt und über Kugeln mit dem Stator formschlüssig verbunden. Ferner besteht der Rotor ebenfalls aus einem Blech und trägt den Bremsbelag, wobei er kraftschlüssig auf der Motorwelle befestigt ist.

Durch die erfindungsgemäße Konzeption und den sehr einfachen Aufbau wird ein Hüllkreis geschaffen, der durch das Laufrad beschrieben wird. Dies ist für Fahrzeuge mit Radnabenantrieb sehr vorteilhaft, da zudem Bauraum für die notwendigen einzubauenden Aggregate zur Verfügung gestellt wird.

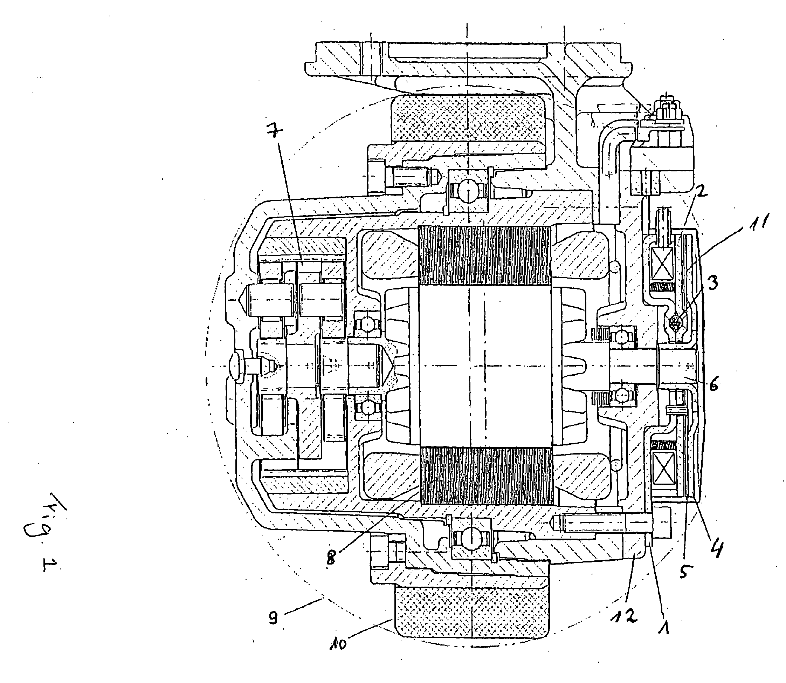

Die Erfindung wird im folgenden anhand der beigefügten Figur, welche eine bevorzugte Ausführungsform eines erfindungsgemäßen Radnabenantriebs schematisch darstellt, beispielhaft näher erläutert.

Gemäß der Figur umfasst der erfindungsgemäße Radnabenantrieb eine Bremse 11, deren Stator 1 vorzugsweise aus einem Blechteil oder Sinterteil besteht, welches mit dem Gehäusedeckel 12 verschraubt ist. Der Stator 1 ist im Rahmen dieser Ausführungsform über Kugeln 3 mit einer aus Blech gefertigten Ankerscheibe 2 formschlüssig verbunden. Ferner umfasst die Bremse 11 einen vorzugsweise aus Blech hergestellten Rotor 4, welcher den Bremsbelag 5 trägt und kraftschlüssig auf der Motorwelle 6 befestigt ist. Werden keine größeren Bremsmomente benötigt, besteht die Möglichkeit, den Radnabenantrieb auch ohne Bremsbelag 5 auszuführen.

Durch den hier vorgestellten, sehr kompakten Aufbau können Getriebe 7 und Motor 8 (für eine Draufsicht auf den Radnabenantrieb gemäß der Figur) innerhalb eines Kreises, dessen Radius durch das Laufrad 10 bestimmt wird, angeordnet werden, so dass der Hüllkreis 9 des erfindungsgemäßen Radnabenantriebes durch das Laufrad 10 bestimmt wird.

### Bezugszeichen

- 1: Stator
- 2: Ankerscheibe
- 3: Kugel
- 4: Rotor
- 5: Bremsbelag
- 6: Motorwelle
- 7: Getriebe
- 8: Motor
- 9: Hüllkreis
- 10: Laufrad
- 11: Bremse
- 12: Gehäusedeckel

## Patentansprüche

1. Radnabenantrieb für ein Laufrad (10), umfassend ein Getriebe (7), einen Motor (8) mit einer Motorwelle (6) und eine Bremse (11), mit einem Stator (1), einer Ankerscheibe (2) und einem Rotor (4), wobei der Motor (8) zwischen der Bremse (11) und dem Getriebe (7) angeordnet ist, wobei das Getriebe als Planetengetriebe ausgeführt ist und der Rotor (4) mit der Motorwelle (6) befestigt ist, so dass der Hüllkreis (9) des Radnabenantriebes durch das Laufrad (10) so bestimmt wird, daß der Radius des Hüllkreis annähernd gleich dem Radius des Laufrades ist, **dadurch gekennzeichnet, dass** die Ankerscheibe (2) über Kugeln (3) mit dem Stator (1) formschlüssig verbunden ist.

2. Radnabenantrieb für ein Laufrad nach Anspruch 1, **dadurch gekennzeichnet, dass** der Stator (1) aus einem Blech oder Sinterteil besteht.

3. Radnabenantrieb für ein Laufrad nach Anspruch 1, **dadurch gekennzeichnet, dass** der Stator (1) mit dem Gehäusedeckel (12) verschraubt ist.

4. Radnabenantrieb für ein Laufrad nach Anspruch 1, **dadurch gekennzeichnet, dass** die Ankerscheibe (2) aus Blech besteht.

5. Radnabenantrieb für ein Laufrad nach Anspruch 1, **dadurch gekennzeichnet, dass** der Rotor (4) aus Blech besteht.

6. Radnabenantrieb für ein Laufrad nach Anspruch 1, **dadurch gekennzeichnet, dass** der Rotor (4) mit der Motorwelle (6) kraftschlüssig verbunden ist.

7. Radnabenantrieb für ein Laufrad nach Anspruch 1, **dadurch gekennzeichnet, dass** der Rotor (4) einen Bremsbelag (5) trägt.

## Claims

1. The invention relates to a wheel-hub drive for a road wheel (10), a motor (8) with a motor shaft (6) and a brake (11) being included, with a stator (1), an armature disk (2) and a rotor (4), the motor (8) being arranged between the brake (11) and the transmission (7), the transmission being a planetary transmission and the rotor (4) being fixed to the motor shaft (6), so that the envelope circle (9) of the wheel-hub drive is determined by the road wheel (10) in such a way that the radius of the envelope circle is approximately equal to the radius of the road wheel, **characterized in that** the armature disk (2) is positively coupled to the stator (1) by means of balls.

2. A wheel-hub drive for a road wheel according to claim 1, **characterized in that** the stator (1) is a plate or sintered component

3. A wheel-hub drive for a road wheel according to claim 1, **characterized in that** the stator (1) is screwed to the housing cover (12).

4. A wheel-hub drive for a road wheel according to claim 1, **characterized in that** the armature disk (2) is made of sheet metal.

5. A wheel-hub drive for a road wheel according to claim 1, **characterized in that** the rotor (4) is made of sheet metal.

6. A wheel-hub drive for a road wheel according to claim 1, **characterized in that** the rotor (4) is frictionally coupled to the motor shaft (6).

7. A wheel-hub drive for a road wheel according to claim 1, **characterized in that** the rotor (4) has a brake lining (5).

## Revendications

1. Entraînement sur moyeu pour une roue de roulement (10), comprenant une transmission (7), un moteur (8) avec un arbre de moteur (6) et un frein (11), un stator (1), un disque d'armature (2) et un rotor (4), dans lequel le moteur (8) est placé entre le frein (11) et la transmission (7), dans lequel la transmission est constituée par une transmission épicycloïdale et le rotor (4) est fixé à l'arbre (6) du moteur, de sorte que le cercle enveloppe (9) de l'entraînement dans le moyeu est déterminé par la roue de roulement (10), de telle manière que le rayon du cercle enveloppe soit à peu près égal au rayon de la roue de roulement, **caractérisé en ce que** le disque d'armature (2) est relié au stator (1) par complémentarité de forme au moyen de billes (3).

2. Entraînement sur moyeu pour une roue de roulement selon la revendication 1, **caractérisé en ce que** le stator (1) est constitué par une tôle ou par une pièce frittée.

3. Entraînement sur moyeu pour une roue de roulement selon la revendication 1, **caractérisé en ce que** le stator (1) est boulonné sur le couvercle (12) du carter.

4. Entraînement sur moyeu pour une roue de roulement selon la revendication 1, **caractérisé en ce que** le disque d'armature (2) est réalisé en tôle.

5. Entraînement sur moyeu pour une roue de roulement selon la revendication 1, **caractérisé en ce que** le rotor (4) est réalisé en tôle.

6. Entraînement sur moyeu pour une roue de roulement selon la revendication 1, **caractérisé en ce que** le rotor (4) est relié à l'arbre de moteur (6) par action de force.

7. Entraînement sur moyeu pour une roue de roulement selon la revendication 1, **caractérisé en ce que** le rotor (4) porte une garniture de frein (5).
